# EUROPÄISCHE PATENTSCHRIFT

(11) **EP 1 645 469 B1**
(45) Veröffentlichungstag und Bekanntmachung des Hinweises auf die Patenterteilung: **05.09.2007**
(21) Anmeldenummer: 05019069.3
(22) Anmeldetag: 02.09.2005
(51) Int. Cl.: B60R 1/00, B60R 1/12

(54) **Beobachtungseinrichtung für seitliche Bereiche eines Kraftfahrzeugs**
Viewing device for lateral regions of a vehicle.
Dispositif de visualisation pour régions latérales d'un véhicule

(30) Priorität: 06.10.2004 DE 102004048718
(43) Veröffentlichungstag der Anmeldung: 12.04.2006
(73) Patentinhaber: Dr.Ing. h.c. F. Porsche Aktiengesellschaft, 70435 Stuttgart (DE)
(72) Erfinder: Straehle, Jürgen, 73770 Denkendorf (DE); Böhlendorf, Alexander, 71065 Sindelfingen (DE)

(56) Entgegenhaltungen:
- EP-A- 1 316 476
- EP-A- 1 437 261
- DE-A1- 10 237 988

## Beschreibung

Die Erfindung bezieht sich auf eine Beobachtungseinrichtung für seitliche Bereiche eines Kraftfahrzeugs nach dem Oberbegriff des Anspruchs 1.

Eine Beobachtungseinrichtung für seitliche Bereiche von Kraftfahrzeugen ist aus der DE 100 43 099 A1 bekannt, bei der eine Kamera verwendet wird, die mit einem Monitor im Inneren des Fahrzeugs verbunden ist, auf dem das aufgenommene Bild von der Kamera angezeigt wird. Des Weiteren ist aus der DE 102 37 988 A1 eine umittelbar in dem den Rückspiegel aufnehmenden Gehäuse eine Kamera angeordnet. Über diese Kamera wird ein seitlicher Fahrzeugbereich beobachtend erfasst und einem Anzeigebildschirm zugeführt. Aus der EP 1 316 476 A2 ist ein Rückblickspiegel mit einer Kamera bekannt, die im Spiegelkopf in einer Halterung eingesetzt ist. Diese Halterung wird in den Spiegelkopf eingeklipst bzw. über Befestigungsmittel gehalten.

Aufgabe der Erfindung ist es, eine Beobachtungseinrichtung mit einem Aufnahmemittel, wie eine Kamera und einem Anzeigemittel zu schaffen, die einfach in einem Außen-Rückblickspiegel montierbar ist und die Möglichkeit einer Beobachtung von seitlichen Fahrzeugbereichen während eines Rangiervorgangs oder sonstigen Fahrvorgängen, ermöglicht.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, dass die Kamera in einen bestehenden Hohlraum des Spiegelfußes einsetzbar ist und nicht wie nach dem Stand der Technik aus der DE 012 37 988 A1 ein Aufnahmeraum für die Kamera im Spiegelgehäuse geschaffen werden muss. Insbesondere ist nach der Erfindung vorgesehen, dass die Kamera in einem vom Spiegelfuß und einer umhüllenden Spiegelfußabdeckung gebildeten Hohlraum zwischen einem innenliegenden Haltekäfig und einer außenliegenden Abdeckkappe angeordnet ist. Diese weist eine zur Fahrbahn ausgerichtete Öffnung für eine Kameralinse auf. Die Abdeckkappe ist einerseits mit dem Haltekäfig verbunden und andererseits in einem Ausschnitt der Spiegelfußabdeckung über Rast- und oder Befestigungsmittel gehalten. Hierdurch wird eine einfache Montage der Kamera im Spiegelfuß ermöglicht und die Kamera selbst kann nahe des Fahrzeugs angeordnet werden und steht nicht vom Spiegelgehäuse vor.

Damit nach der Erfindung die Kamera während der Beobachtungsvorgänge abgeschaltet werden kann, ist nach der Erfindung vorgesehen, dass das Aufnahmemittel im Außenrückspiegel sowie das Anzeigemittel im Innenrückblickspiegel bei jeder Inbetriebnahme des Fahrzeugs über die Zündung selbsttätig einschaltbar ist und dass im elektrischen Steuerkreis ein Schalter angeordnet ist, der Abhängigkeit von einem Geschwindigkeitssignal des Fahrzeugs eine automatische An- bzw. eine manuelle Abschaltung der Aufnahme und Anzeigemittel ermöglicht. Hierdurch wird sichergestellt, dass die Kamera und somit das Anzeigemittel im Fahrzeuginneren im Betrieb ist und erst beispielsweise bei Fahrvorgängen ab einer größeren Geschwindigkeit manuell abgeschaltet werden kann. Auch soll sich die Kamera bei jeder neuen Zündung automatisch einschalten, auch wenn die Kamera vorher abgeschaltet war.

Die Kamera ist nach der Erfindung unterhalb des von der Abdeckung umgebenden Spiegelfußes angeordnet, wobei sie zur Spiegelfußabdeckung nach außen hin vorstehend ist. Der Haltekäfig für die Kamera weist abgestellte Schenkel zur Befestigung über Schraubmittel mit der Abdeckkappe auf und bildet mit der Kamera und der Abdeckkappe eine vormontierbare Baueinheit, die von außen her in den Hohlraum einsetzbar ist. Die Kamera ist so eingestellt und im Spiegelfuß angeordnet, dass ein seitlicher Fahrzeugbereich von vor einer A-Säule bis hinter einer B-Säule über die Kamera aufnehmbar und mittels des Anzeigemittels beobachtbar ist. Hierdurch wird in vorteilhafter Weise nach der Erfindung eine ständige Beobachtung von Bereichen des Fahrzeugs möglich, die vom Fahrer in Sitzposition nicht einsehbar sind.

Ein Ausführungsbeispiel der Erfindung ist in den Zeichnungen dargestellt und wird im Folgenden näher beschrieben.

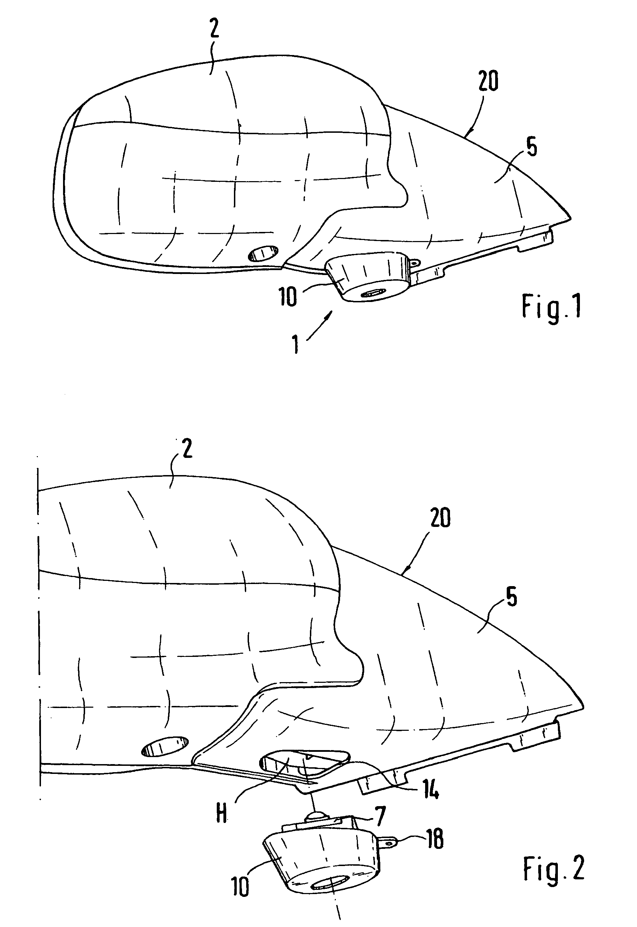

Es zeigen
- Fig. 1: eine schaubildliche. Darstellung eines Seitenrückblickspiegels von vorne - in Bezug auf die Fahrtrichtung des Fahrzeugs gesehen - mit eingebauter Beobachtungseinrichtung im Spiegelfuß,
- Fig. 2: eine schaubildliche Darstellung gem. Fig. 1 mit ausgebauter Beobachtungseinrichtung,

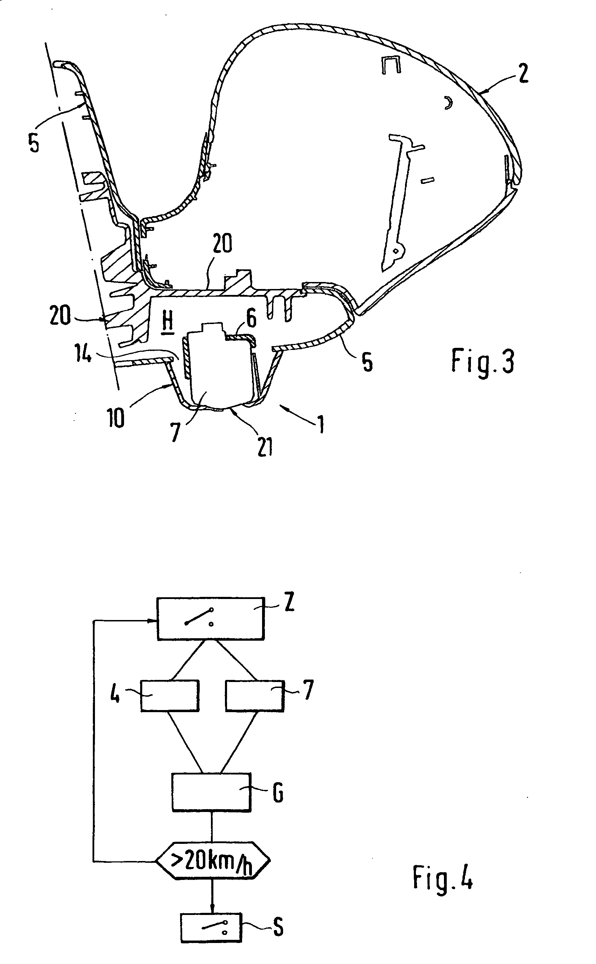

- Fig. 3: eine Schnittdarstellung des Rückblickspiegels mit eingebauter Beobachtungseinrichtung,
- Fig. 4: ein Diagramm über die Ein- und Ausschaltung bezüglich der Aufnahme und Anzeigemittel,
- Fig. 5: eine schaubildliche Seitenansicht der Einrichtung mit Haltekäfig und Abdeckkappe und
- Fig. 6: eine Draufsicht zu Fig. 5.

Eine Beobachtungseinrichtung 1 für die seitlichen nicht unmittelbar vom Fahrer einsehbaren Bereiche eines Kraftfahrzeugs umfasst in einem Seitenrückblickspiegel 2 ein Aufnahmemittel, wie beispielsweise eine Kamera 7 und im Fahrzeuginnenraum ein Anzeigemittel 4, beispielsweise in einem Innenrückblickspiegel, das aus einem Display bestehen kann.

Die Kamera 7 ist in einem vorhandenen Hohlraum H eines Spiegelfußes 20 und einer diesen umhüllenden Spiegelfußabdeckung 5 angeordnet und wird zwischen einem Haltekäfig 8 und einer Abdeckkappe 10 ortsfest in einem Ausschnitt 14 gehalten. Hierzu ist der Haltekäfig 8 mittels abgestellter Schenkel 11, 12, die Befestigungsmittel aufnehmen, mit der Abdeckkappe 10 verschraubt. Der Haltekäfig 8 weist rundum Wände und einen Teilboden zur Abstützung der Kamera auf. Die Abdeckkappe 10 ist als schalenförmiges Teil ausgeführt und außenseitig abgerundet.

Die Abdeckkappe 10 kann mit dem Haltekäfig 8 und der Kamera 7 vormontiert und dann in den Ausschnitt 14 der Abdeckkappe 10 eingesetzt und mittels Rast- und/oder Befestigungsmittel mit der Abdeckkappe 10 fest verbunden. Der Haltekäfig 8 ist innenliegend des Hohlraumes H des Spiegelfußes 20 bzw. der Spiegelfußabdeckung 5 und die Abdeckkappe 10 ist außenliegend der Spiegelfußabdeckung 5 vorgesehen. Es ist nach der Erfindung auch eine solche innenliegende Anordnung der Kamera 7 im Hohlraum H des Spiegelfußes 20 denkbar, wobei dann eine niveaugleiche Abdeckkappe mit der Spiegelfußabdeckung 5 im Ausschnitt 14 dieser Spiegelfußabdeckung 5 möglich ist.

Die Kamera 7 ist vorzugsweise unterhalb des von der Spiegelfußabdeckung 5 umgebenden Spiegelfußes 20 angeordnet und ist bzw. kann vorstehend zur Fläche der Abdeckung 5 vorgesehen sein.

Eine Abstützung des Haltekäfigs 8 an der Abdeckkappe 10 erfolgt über die beiden abgestellten Schenkel 11, 12, die mit Anformungen 16, 17 im Inneren der Abdeckkappe 10 verschraubbar sind. Die Abdeckkappe 10 selbst kann über Rastmittel Klipse oder sonstige Klemmmittel im Ausschnitt 14 festgesetzt werden, wobei zusätzlich auch Schraubmittel verwendet werden können, die in eine Zunge 18 gehalten und in die Spiegelfußabdeckung 5 bzw. in den Spiegelfuß einschraubbar sind.

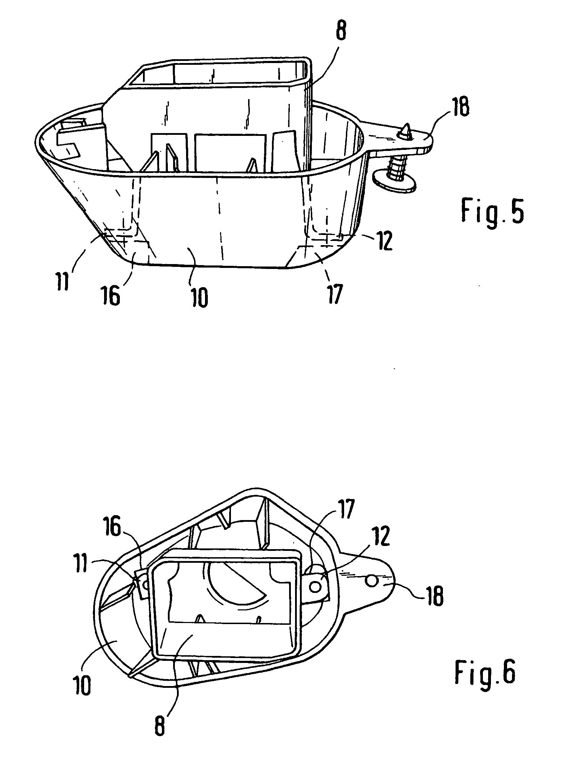

Wie beispielsweise im Diagramm gem. Fig. 4 dargestellt, soll das Aufnahmemittel (Kamera 7) sowie das Anzeigemittel 4 bei Zündung über das Zündschloss Z des Fahrzeugs arbeiten, das heißt, die Kamera 7 sowie das Anzeigemittel 4 sind automatisch eingeschaltet und über ein Abruf der Fahrgeschwindigkeit bei G und mittels einer Abfrage, ob das Fahrzeug mit einer entsprechenden Geschwindigkeit, beispielsweise > 20 km/h fährt, kann dann eine Abschaltung des Aufnahme- und Anzeigemittels 4 und 7 beispielsweise über einen Schalter S erfolgen. Sobald das Fahrzeug über das Zündschloss Z wieder angelassen wird, sind die Aufnahme- und Anzeigemittel 4 und 7 wieder aktiv, auch wenn im vorherigen Fahrbetrieb eine Abschaltung erfolgte. In jedem Fall können sich die Aufnahme- und Anzeigemittel 4, 7 bei geringen Geschwindigkeiten, wie sie beim Einparken bzw. Rangiervorgängen vorkommen, wieder aktivieren.

## Patentansprüche

1. Beobachtungseinrichtung für seitliche Bereiche eines Kraftfahrzeugs, das einen Außenrückblickspiegel (2) aufweist, der in einem Schutzgehäuse eingesetzt ist, welches mit dem Fahrzeugaufbau mittels eines mit einer Abdeckung (5) versehenen Spiegelfußes (20) verbunden ist und der Außenrückblickspiegel (2) an der dem Fahrer abgewandeten Fahrerseite ein aus einer Kamera (7) bestehendes Aufnahmemittel umfasst, das mit einem Anzeigemittel (4) im Innenrückblickspiegel des Fahrzeugs zusammenarbeitet, **dadurch gekennzeichnet, dass** die Kamera (7) in einem vom Spiegelfuß (20) und einer umhüllenden Spiegelfußabdeckung (5) gebildeten Hohlraum (H) zwischen einem innenliegenden Haltekäfig (6) und einer außenliegenden Abdeckkappe (10) angeordnet ist, die eine zur Fahrbahn ausgerichtete Öffnung (21) für eine Kameralinse aufweist und dass die Abdeckkappe (10) einerseits mit dem Haltekäfig (6) verbunden und andererseits in einem Ausschnitt (14) der Spiegelfußabdeckung (5) über Rast- und/oder Befestigungsmittel festgehalten ist.

2. Beobachtungseinrichtung nach Anspruch 1, **dadurch gekennzeichnet, dass** das Aufnahmemittel (7) im Außenrückspiegel (2) sowie das Anzeigemittel (4) im Innenrückblickspiegel (2) bei jeder Inbetriebnahme des Fahrzeugs über die Zündung (Z) selbsttätig einschaltbar ist und dass im elektrischen Steuerkreis ein Schalter (S) angeordnet ist, der in Abhängigkeit von einem Geschwindigkeitssignal > V des Fahrzeugs eine automatische Abschaltung der Aufnahme- und Anzeigemittel (4, 7) ermöglicht.

3. Beobachtungseinrichtung nach den Ansprüchen 1 oder 2, **dadurch gekennzeichnet, dass** die Kamera unterhalb des von der Spiegelfußabdeckung (5) umgebenden Spiegelfußes (20) angeordnet ist, wobei die Abdeckkappe (10) zur Spiegelfußabdeckung (5) nach außen hin vorstehend ist.

4. Beobachtungseinrichtung nach den Ansprüchen 1, 2 oder 3, **dadurch gekennzeichnet, dass** der Haltekäfig (6) abgestellte Schenkel (11, 12) zur Befestigung über Schraubmittel mit der Abdeckkappe (10) aufweist und der Haltekäfig (6) mit der Kamera (7) und der Abdeckkappe (10) eine vormontierbare Baueinheit bildet, die von außen in den Hohlraum (H) einsetzbar ist.

5. Beobachtungseinrichtung nach einem der vorhergehenden Ansprüche, **dadurch gekennzeichnet, dass** die Kamera (7) in der Weise im Spiegelfuß (20) angeordnet und ausgerichtet ist, dass seitliche Fahrzeugbereiche von vor einer A-Säule bis hinter einer B-Säule über die Kamera aufnehmbar und mittels des Anzeigemittels (4) beobachtbar ist.

6. Beobachtungseinrichtung nach einem oder mehreren der vorhergehenden Ansprüche, **dadurch gekennzeichnet, dass** die Abdeckkappe (10) niveaugleich mit der Außenoberfläche der Spiegelgeäuseabdeckung (5) verläuft und in der Abdeckkappe eine Öffnung für eine Kameralinse vorgesehen ist.

## Claims

1. An observation device for lateral regions of a motor vehicle which has an external rear-view mirror (2) which is inserted in a protective casing which is connected to the vehicle body by means of a mirror foot (20) provided with a cover (5), and the external rear-view mirror (2), on the driver's side facing away from the driver, has a recording means which comprises a camera (7) and which co-operates with a display means (4) in the internal rear-view mirror of the vehicle, **characterized in that** the camera (7) is arranged between a retaining cage (6) situated on the inside and a cover cap (10) situated on the outside in a cavity (H) formed by the mirror foot (20) and an enclosing mirror-foot cover (5), the cover cap (10) having an opening (21) directed towards the roadway for a camera lens, and the cover cap (10) is connected to the retaining cage (6) on the one hand and is held in a fixed manner in an aperture (14) in the mirror-foot cover (5) by way of catching and/or fastening means on the other hand.

2. An observation device according to Claim 1, **characterized in that** the recording means (7) in the external rear-view mirror (2) and the display means (4) in the internal rear-view mirror (2) are capable of being switched on automatically each time the vehicle is started up by way of the ignition (Z), and a switch (S), which permits an automatic switch-off of the recording and display means (4, 7) in a manner dependent upon a speed signal > V of the vehicle, is arranged in the electrical control circuit.

3. An observation device according to Claims 1 or 2, **characterized in that** the camera is arranged below the mirror foot (20) surrounded by the mirror-foot cover (5), wherein the cover cap (10) projects outwards with respect to the mirror-foot cover (5).

4. An observation device according to Claims 1, 2 or 3, **characterized in that** the retaining cage (6) has projecting legs (11, 12) for fastening by way of screwing means to the cover cap (10), and the retaining cage (6) forms, with the camera (7) and the cover cap (10), a structural unit which is capable of being pre-assembled and which is capable of being inserted into the cavity (H) from the outside.

5. An observation device according to any one of the preceding Claims, **characterized in that** the camera (7) is arranged and orientated in the mirror foot (20) in such a way that lateral regions of the vehicle are capable of being recorded by way of the camera from an A-column to behind a B-column and are capable of being observed by means of the display means (4).

6. An observation device according to one or more of the preceding Claims, **characterized in that** the cover cap (10) extends at the same level as the external surface of the mirror-casing cover (5), and an opening for a camera lens is provided in the cover cap.

## Revendications

1. Dispositif de visualisation des zones latérales d'un véhicule automobile, qui comporte un rétroviseur extérieur (2), qui est monté dans un boîtier de protection, qui est assemblé à la caisse du véhicule au moyen d'un pied de rétroviseur (20) muni d'un cache (5), et le rétroviseur extérieur (2), sur le côté passager du véhicule, comporte un moyen d'enregistrement formé par une caméra (7), qui coopère avec un moyen d'affichage (4) dans le rétroviseur intérieur du véhicule, **caractérisé en ce que** la caméra (7) est montée dans une cavité (H), formée par le pied du rétroviseur (20) et un cache (5) entourant ce dernier, entre une cage de fixation (8) intérieure et un couvercle (10) extérieur, qui comporte un orifice (21), orienté vers la voie de circulation, pour une lentille de caméra, et **en ce que** le couvercle (10), d'une part, est assemblé à la cage de fixation (8) et, d'autre part, est fixé par des moyens de blocage et/ou de fixation dans une découpe (14) du cache (5) du pied du rétroviseur.

2. Dispositif de visualisation selon la revendication 1, **caractérisé en ce que** le moyen d'enregistrement (7) dans le rétroviseur extérieur (2), ainsi que le moyen d'affichage (4) dans le rétroviseur intérieur (2) sont aptes à être activés automatiquement à chaque mise en marche du véhicule par l'intermédiaire du contact (Z), et **en ce que** dans le circuit électrique est monté un interrupteur (S) qui, en fonction d'un signal de vitesse > V du véhicule, permet une désactivation automatique du moyen d'enregistrement et du moyen d'affichage (7, 4).

3. Dispositif de visualisation selon la revendication 1 ou 2, **caractérisé en ce que** la caméra est montée en dessous du pied du rétroviseur (20) entouré par le cache (5), le couvercle (10) étant en saillie vers l'extérieur par rapport au cache (5) du pied du rétroviseur.

4. Dispositif de visualisation selon les revendications 1, 2 ou 3, **caractérisé en ce que** la cage de fixation (8) comporte des branches d'appui (11, 12) pour la fixation avec le couvercle (10) par des moyens de vissage et la cage de fixation (8) forme avec la caméra (7) et le couvercle (10) une unité modulaire préfabriquée, qui peut être insérée de l'extérieur dans la cavité (H).

5. Dispositif de visualisation selon l'une quelconque des revendications précédentes, **caractérisé en ce que** la caméra (7) est montée et orientée dans le pied du rétroviseur (20) de telle sorte que des zones latérales du véhicule, depuis la partie antérieure au pied avant jusque derrière le pied central, peuvent être enregistrées par la caméra et être visualisées sur le moyen d'affichage (4).

6. Dispositif de visualisation selon une ou plusieurs des revendications précédentes, **caractérisé en ce que** le couvercle (10) est situé à fleur de la surface extérieure du cache (5) du pied du rétroviseur et un orifice pour une lentille de caméra est prévu dans le couvercle.
